# EUROPEAN PATENT APPLICATION

(11) **EP 1 142 693 A2**
(43) Date of publication of application: **10.10.2001**
(21) Application number: 01108772.3
(22) Date of filing: 06.04.2001
(51) Int. Cl.: B29D 11/00

(54) **Method of producing optical elements, in particular for vehicle lamp assemblies**

(30) Priority: 07.04.2000 IT MI000761
(71) Applicant: Fallini, Andrea, 20025 Legnano (IT); Fallini, Roberto, 43010 Polesine Parmense (IT)
(72) Inventor: Fallini Andrea, 20025 Legnano (IT)
(74) Representative: Cerbaro, Elena, Dr.

(57) **Abstract**

A film (13) of polymer material transparent to light is printed, e.g. silk-screen printed, with a colored pattern (16) of given design and defined by at least a first layer (17) of coloring substances having different-colored adjacent functional regions; and the film (13) so patterned is placed inside a mold into which a monochromatic plastic material transparent to light is then fed to mold a contoured body (9) defining a main body of the optical element (1) being produced, so as to obtain an optical element (1) having a pattern (16) which, in use, confers the desired chromatic properties to the light flowing through the optical element (1).

## Description

The present invention relates to a method of producing optical elements, in particular for vehicle lamp assemblies, and to optical elements produced using such a method.

As is known, vehicle lamps perform different functions, each with a light signal of a different color. For example, the various parts of the rear lamp assembly of a vehicle act as a direction indicator, parking lamp, stop lamp, and reversing lamp.

One of the commonest ways of obtaining different colors of the light emitted by the lamp assembly is to use lenses (i.e. the elements covering the lamps and normally made of transparent plastic material) comprising sectors of different colors. Multicolor lenses of this type can either be left exposed or concealed with another transparent cover lens of a given color. Generally speaking, multicolor lenses are fairly complicated and expensive to produce by requiring the use of highly complex molds and presses for injecting different-colored materials into the molds (as well as molds for producing the cover lens if provided).

Moreover, to ensure uniform light flow from each point on the lens, known lenses have geometric profiles or prisms (reflectors) on the inner surface; and, to form such profiles when molding the lens, the structure of the mold must be provided with appropriate electroformed inserts.

In other words, known methods of producing multicolor lenses are impaired by production difficulties and relatively high cost.

It is therefore an object of the present invention to provide a method of producing optical elements, in particular for vehicle lamp assemblies, designed to eliminate the aforementioned drawbacks of known methods, and which, in particular, is cheap and easy to implement and provides for producing highly efficient, low-cost optical elements.

According to the present invention, there is provided a method of producing an optical element, in particular for vehicle lamp assemblies, characterized by comprising the steps of:
- producing, from a material transparent to light, a contoured body defining a main body of said optical element;
- printing, preferably ink printing, on a substrate of polymer material transparent to light, a colored pattern of a given design and defined by at least a first layer of coloring substances to obtain a substrate patterned according to said given design; and
- placing said patterned substrate on a surface of said contoured body.

The invention also extends to an optical element, in particular for vehicle lamp assemblies, produced using the method described above.

A number of non-limiting embodiments of the present invention will be described by way of example with reference to the accompanying drawings, in which:
Figure 1 shows a highly schematic view of a vehicle lamp assembly with an optical element in accordance with the invention;
Figure 2 shows, highly schematically and with no regard for proportion, a larger-scale detail of the Figure 1 optical element;
Figure 3 shows, schematically and with no regard for proportion, a variation of the optical element according to the invention.

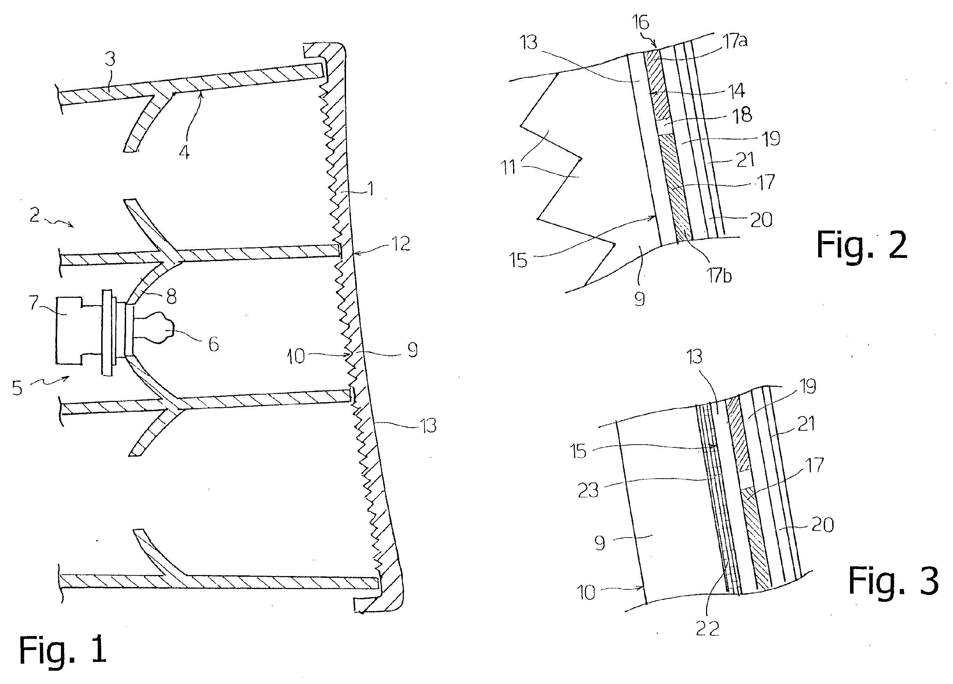

With reference to Figures 1 and 2, number 1 indicates an optical element defining the lens of a vehicle lamp assembly 2. Lamp assembly 2 (substantially known and not described or illustrated in detail for the sake of simplicity) comprises a supporting structure 3 defining a cavity 4 housing one or more lighting assemblies 5, each of which comprises a bulb 6 fitted to a bulb-holder 7, and a reflector 8 (all known). Optical element 1 defines a lens of lamp assembly 2 closing cavity 4 and fixed to supporting structure 3 in known manner.

Optical element 1 comprises a main body 9 defined by a contoured body made of monochromatic material transparent to light. An inner surface 10, facing cavity 4, of main body 9 has appropriate known prisms 11 for distributing the light from bulb 6 so that the light flow from optical element 1 is substantially uniform. A substrate 13, defined in the example shown by a flexible film of polymer material transparent to light, is applied to a surface 12, opposite surface 10, of main body 9. On a face 14 opposite the face 15 applied to surface 12, film 13 has a colored pattern 16 of a given design and comprising at least one layer 17 of coloring substances (inks, paints, etc.) arranged to define adjacent functional regions (only two shown and indicated 17a and 17b) of different colors corresponding to the colors required to perform the different functions of the lamp assembly. Each functional region of layer 17 is permeable to specific wavelengths of the light, so that only the desired portion of the light spectrum (of the desired color) emerges from each region.

Layer 17 of pattern 16 may also comprise regions 18 of zero permeability to light, e.g. arranged so as to separate adjacent functional regions of different colors (e.g. regions 17a, 17b) and/or to achieve particular designs or aesthetic effects.

Pattern 16 may also comprise, on top of layer 17, a predominantly decorative layer 19 of ink or paint, either transparent or of any desired color, but highly permeable to light (i.e. of high transmittance over the entire light spectrum) to impart to optical element 1 as a whole, when bulb 6 is off, a given even color (e.g. matching the color of the vehicle bodywork).

To protect layer 17 (and layer 19, if provided) from exposure to sunlight (in particular, ultraviolet radiation), pattern 16 comprises, over layer 17 and layer 19 (if provided), a layer 20 of inks or paints containing known ultraviolet ray absorbers; and a further layer 21, of ink or paint highly permeable to light and having specific wear resistance characteristics, is formed over layer 20 to protect the underlying layers 17, 19, 20. Obviously, as opposed to two separate layers 20, 21, provision may be made for a single protective layer appropriately formulated to provide both UV and wear protection. The decorative function of layer 19 may also be achieved by layer 20 or 21 (or by the single protective layer) of the desired color.

In the Figure 3 variation, in which any details similar to or identical with those already described are indicated using the same reference numbers, face 15 of film 13 (interposed between film 13 and surface 12 of main body 9) is covered with a screen 22 defined by at least one layer 23 of coloring substances arranged so that layer 23 comprises adjacent regions of different optical densities and such as to achieve uniform light flow through layer 23. In this case, prisms 11 are not required on surface 10 of main body 9, which is therefore substantially flat. Screen 22 may also be defined by a number of layers 23, which may be located on either of or both faces 14, 15 of film 13.

In actual use, when bulb 6 is off, optical element 1 has a multicolored appearance resulting from the colored functional regions of layer 17. When bulb 6 is turned on, the emitted light flows through film 13 and layer 17 to assume the color of the functional region through which it flows and so perform the specific signaling function required. If decorative layer 19 is provided, optical element 1 imparts to lamp assembly 2 a given appearance in rest or daytime conditions (with bulb 6 off) and a different appearance in working or night-time conditions (with bulb 6 on). When bulb 6 is off, in fact, optical element 1 is the same even color as layer 19 (covering and concealing the underlying layer 17), whereas, when bulb 6 is turned on, the light is colored as it flows through colored layer 17, and then flows substantially unchanged through highly permeable layer 19 to come out the same color. The light emitted by bulb 6 is made uniform by prisms 11 or screen 22 before reaching film 13.

Optical element 1 is produced using the following method.

Colored pattern 16 of given design is printed on film 13 of polymer material transparent to light. More specifically, layer 17 of coloring substances is printed on face 14 of film 13 using a known ink, e.g. silk-screen, printing process and inks selected according to color and permeability to light. Pattern 16 may, of course, be formed using other known printing processes and other coloring substances, e.g. paints. Printing is performed so that layer 17 comprises different-colored adjacent functional regions arranged according to the required design and formed using different inks and/or paints of appropriate and different chromatic and transmittance characteristics.

Decorative layer 19, UV protection layer 20 and wear-resisting layer 21 (possibly coincident) are then formed using the same printing processes (or simply painted).

Once pattern 16 is printed, film 13 is cut and possibly drawn or at any rate shaped to substantially correspond to the shape of the optical element 1 being produced; and the patterned film 13 is placed inside a conventional mold, into which the monochromatic plastic material transparent to light is then fed to mold main body 9 of optical element 1. The polymer material of film 13 and the plastic material of main body 9 are so selected as to be compatible with each other, and so that film 13 adheres to main body 9 during the molding process.

To produce optical elements ensuring uniform light flow through them with no prisms 11, the method comprises a further printing step in which film 13 is printed with screen 22 defined by layer 23 of coloring substances applied to either one or both faces 14, 15 of film 13, so that layer 23 comprises adjacent regions of different optical densities and such as to achieve uniform light flow through layer 23. More specifically, the inks or paints used for layer 23 are applied to film 13 with a greater density at the brightly illuminated regions, and with a lower (or zero) density at the poorly illuminated regions.

The advantages of the invention, as compared with the known state of the art, will be clear from the foregoing description. In particular, optical elements can be produced using conventional molds and molding presses, with no need for complex, high-cost multicomponent molding operations. The main body of the optical element, in fact, is made entirely from one even-colored (or fully transparent) plastic material, and it is the pattern printed on the optical element which imparts the desired chromatic properties to the light flowing through the optical element.

The film screen applied to the main body of the optical element provides for uniform light flow from the optical element, with no need for prisms (thus further simplifying the molding process).

By forming the pattern in superimposed layers of inks with different degrees of permeability to light - in particular, with the even-colored, highly permeable ink layer covering the ink layers required to perform the functions of the lamp assembly - the optical element acquires one appearance in rest or daytime conditions (e.g. so that the lamp assembly is the same color as the bodywork), and a different appearance in work or night-time conditions, with no need for a decorative cover lens (thus reducing the number of component parts and simplifying assembly and production processes in general).

Clearly, changes may be made to the method and optical element as described and illustrated herein without, however, departing from the scope of the present invention.

In particular, as opposed to a flexible film, pattern 16 may be applied to a self-supporting substrate, which, in that case, may even be defined by main body 9 itself of optical element 1, so that pattern 16 would be printed directly on to a surface of main body 9.

## Claims

1. A method of producing an optical element (1), in particular for vehicle lamp assemblies, **characterized by** comprising the steps of:
- producing, from a material transparent to light, a contoured body (9) defining a main body of said optical element;
- printing, on a substrate (13) of polymer material transparent to light, a colored pattern (16) of a given design and defined by at least a first layer (17) of coloring substances to obtain a substrate patterned according to said given design; and
- placing said patterned substrate on a surface (12) of said contoured body (9).

2. A method as claimed in Claim 1, **characterized in that** said substrate is defined by a film (13) of said polymer material transparent to light; said method also comprising a step of causing the patterned film to adhere integrally to said surface (12) of said contoured body (9).

3. A method as claimed in Claim 2, **characterized in that** said step of printing said pattern (16) on said film (13) is so performed that said at least a first layer (17) of coloring substances comprises different-colored adjacent functional regions arranged according to said given design.

4. A method as claimed in Claim 2 or 3,
**characterized in that** said step of printing said pattern (16) on said film (13) is an ink printing step, in particular a silk-screen printing step.

5. A method as claimed in one of Claims 2 to 4, **characterized in that** said contoured body (9) is made of monochromatic plastic material transparent to light; said step of producing said contoured body being a molding step conducted in a mold.

6. A method as claimed in Claim 5, **characterized in that** said step of applying said patterned film to said contoured body is performed simultaneously with said molding step; said patterned film being placed inside said mold before said plastic material is fed into said mold to perform said molding step; said polymer material of said film and said plastic material of said contoured body being so selected as to be compatible with each other, and so that said patterned film adheres to said surface of the contoured body at said molding step.

7. A method as claimed in one of the foregoing Claims, **characterized by** comprising a further step of:
- printing, on said substrate (13) of polymer material transparent to light, a screen (22) defined by at least a second layer (23) of coloring substances arranged on said substrate so that said at least a second layer (23) comprises adjacent regions of different optical densities and such as to achieve uniform light flow through said at least a second layer.

8. A method as claimed in one of the foregoing Claims, **characterized in that** said step of printing said pattern (16) on said substrate (13) comprises a step of applying on said substrate, over said at least a first layer (17), at least a third monochromatic layer (19) highly permeable to light.

9. An optical element (1), in particular for vehicle lamp assemblies, comprising a contoured body (9) made of monochromatic material transparent to light and defining a main body of said optical element; said optical element being **characterized by** also comprising, on a surface (12) of said main body (9), a substrate (13) of polymer material transparent to light; said substrate (13) having a colored pattern (16) of given design and defined by at least a first layer (17) of coloring substances.

10. An optical element as claimed in Claim 9, **characterized in that** said substrate is a film (13) applied to said surface (12) of said main body (9).

11. An optical element as claimed in Claim 9 or 10, **characterized in that** said at least a first layer (17) of coloring substances comprises different-colored adjacent functional regions arranged according to said given design.

12. An optical element as claimed in one of Claims 9 to 11, **characterized in that** said substrate (13) also has a screen (22) defined by at least a second layer (23) of coloring substances arranged on said substrate (13) so that said at least a second layer (23) comprises adjacent regions of different optical densities and such as to achieve uniform light flow through said at least a second layer (23).

13. An optical element as claimed in one of Claims 9 to 12, **characterized by** also comprising, over said at least a first layer (17), at least a third monochromatic layer (19) highly permeable to light.
